# EUROPEAN PATENT APPLICATION

(11) **EP 4 847 421 A1**
(43) Date of publication of application: **02.12.2026**
(21) Application number: 26180833.1
(22) Date of filing: 25.05.2026
(51) Int. Cl.: B65G 1/12, B41F 13/00

(54) **LOADING UNIT FOR SUPPORTING AND STORING TUBULAR ITEMS IN AN AUTOMATED WAREHOUSE, IN PARTICULAR FOR SUPPORTING AND STORING PRINTING SLEEVES, AND AUTOMATED WAREHOUSE PROVIDED WITH SUCH LOADING UNIT**

(30) Priority: 28.05.2025 IT 202500012337
(71) Applicant: ICAM S.p.A., 70017 Putignano (BA) (IT)
(72) Inventor: BIANCO, Graziano, 70017 PUTIGNANO (BA) (IT)
(74) Representative: Studio Torta S.p.A.

(57) **Abstract**

A loading unit (4) for supporting and storing tubular items in an automated warehouse (1) is provided, in particular for supporting and storing printing sleeves (20); the loading unit (4) has a tray (4a) and a rack (36), which is arranged in a fixed position on an upper face of the tray (4a) and includes a plurality of arms (51) for supporting respective tubular items, with an arrangement such that the axes (21) of the tubular items are substantially horizontal and parallel to each other.

## Description

### Cross-reference to related applications

This patent application claims priority from Italian patent application no. 102025000012337 filed on May 28, 2025, the entire disclosure of which is incorporated herein by reference.

### Technical field

The present invention relates to a loading unit for supporting and storing tubular items in an automated warehouse. In particular, the present invention relates to the supporting and storing of printing sleeves, without thus losing its general nature. Such items are generally referred to with the English term "sleeves", independently of the printing technology for which they are used (for example, flexographic, rotogravure, offset, digital, etc., printing).

### Context

As is known, automated warehouses are provided with loading units which generally have a series of compartments for containing and transporting various items.

Typically, such loading units have, in plan view, a rectangular shape, and can be transferred automatically by means of motorised mechanisms, away from and towards at least one picking/depositing station. In such station, the user operates manually, picking or depositing items, standing in front of, or alongside, the loading unit that has been transferred into the station. In certain cases, the station is also provided with a selective access device, also called as a "selector", which closes at the top the space where the loading unit is transferred and is configured to allow access only to those compartments for which the user has authorisation. In other words, the selector prevents unauthorised access to the other compartments of the loading unit arranged in the station. For example, known selectors are provided with doors and/or with shutters.

In certain applications, there is a need to store, in the warehouse, items with a tubular shape, which have relatively large dimensions and require particular attention insofar as concerns the integrity of their outer surface, which must not strike other objects, in order to avoid possible damage. In these cases, a selector is not usually provided in the picking/depositing station.

Printing sleeves belong to this category of items. For example, such sleeves can indicatively have a height of around 1.5 metres, and they must be transported and supported so as to remain spaced apart from one another, in order to avoid damage to the cylindrical outer surface thereof.

Usually, in the prior art, the printing sleeves are transported and supported by trolleys which are configured to maintain them with the axis vertical. However, an arrangement of this type is not applicable (or would, in any case, be very disadvantageous) if used on the loading units of automated warehouses.

In fact, this arrangement is very cumbersome and does not facilitate the loading and unloading operations in the picking/depositing station of the automated warehouse. In particular, the operators responsible for depositing and picking the sleeves at the station would have to operate maintaining them in the vertical position: considering the weight and the dimensions of such sleeves, these are relatively complex manual operations, which can also lead to accidental impacts and, therefore, unintentional damage.

The aim of the present invention is, therefore, to provide a loading unit which can solve the just described drawbacks in a simple and economical way.

In particular, it is appropriate to provide a loading unit which facilitates the operations of loading and unloading of the printing sleeves in the picking/depositing station of automatic warehouses.

US2006045676A1 describes a loading unit according to the preamble of claim 1, applied on a forklift truck. There is a need to improve this solution of the prior art.

### Summary

According to the present invention, a loading unit for supporting and storing tubular items in an automated warehouse is provided, in particular for supporting and storing printing sleeves, in accordance with what is defined in claim 1.

The dependent claims from 2 to 9 define preferred embodiments of the loading unit according to the present invention.

The present invention also relates to an automated warehouse as defined in claim 10.

### Brief description of the drawings

The invention will now be described with reference to the appended drawings, which illustrate a non-limiting embodiment thereof, wherein:
- Figure 1 is a perspective view, with parts removed for clarity, of an automated warehouse provided with a preferred embodiment of the loading unit for supporting and storing tubular items, in particular for supporting and storing printing sleeves, according to the dictates of the present invention;
- Figure 2 is a simplified perspective view that shows a loading, or unloading, operation, in order to deposit, or pick, a tubular item at a picking/depositing station of the warehouse of Figure 1;
- Figure 3 is a perspective view of the tubular item;
- Figure 4 is a perspective view that shows, on an enlarged scale, a loading unit that does not form part of the present invention; and
- Figure 5 is similar to Figure 4 and shows a preferred embodiment of the loading unit according to the dictates of the present invention, with a further enlarged detail.

### Description of preferred embodiments

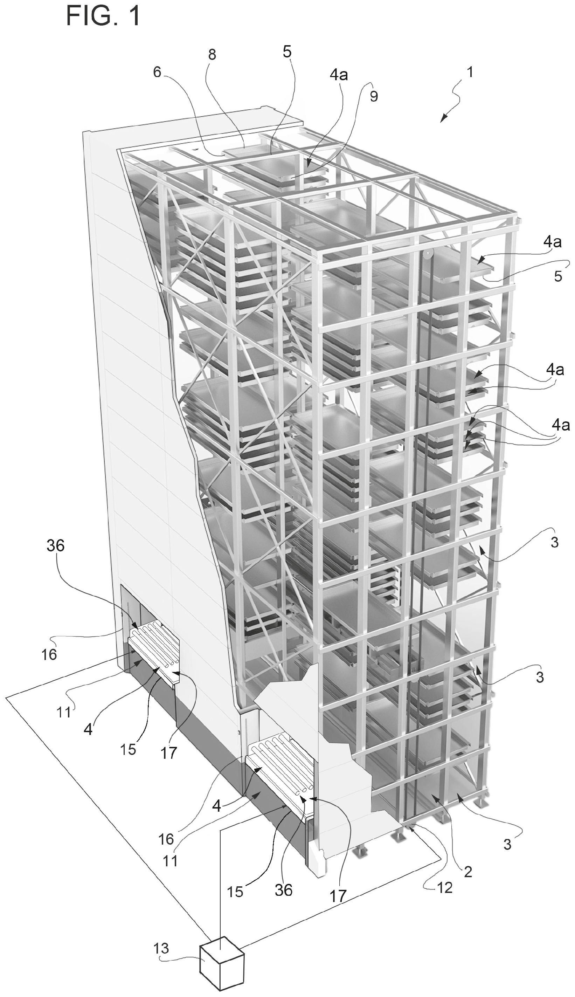

In Figure 1, reference number 1 indicates an automated warehouse, comprising a fixed structure 2 defining a plurality of storage positions 3 having dimensions such as to support and store, each, a respective loading unit 4. In the example shown, the structure 2 has a vertical extension of the multi-column type, but the present invention also applies to warehouses with horizontal extension or warehouses of the single-column type.

The loading units 4 comprise respective trays 4a, defined essentially by containers that are open at the top, with a relatively limited height relative to the other two dimensions.

Each tray 4a comprises a plate 5 with rectangular perimeter, defined by a pair of long edges 6 parallel to one another and a pair of short edges 8 orthogonal to the long edges 6. According to a variant, not illustrated, the plates 5 are substantially square, rather than being rectangular. Each tray 4a, preferably, comprises sides 9 that project upwards from the edges 6,8 of the plate 5.

Preferably, the upper face of the plate 5 is devoid of walls or septa, so the overall space above the plate 5 defines a single volume, i.e. a volume that is not divided into several sectors or compartments, in contrast with what occurs in other applications.

Preferably, the trays 4a are components already normally available on the market, with plates 5 that have standardised dimensions.

The warehouse 1 further comprise at least one picking/depositing station, indicated with reference number 11. In the particular example of Figure 1, two stations 11 are shown, spaced apart from one another.

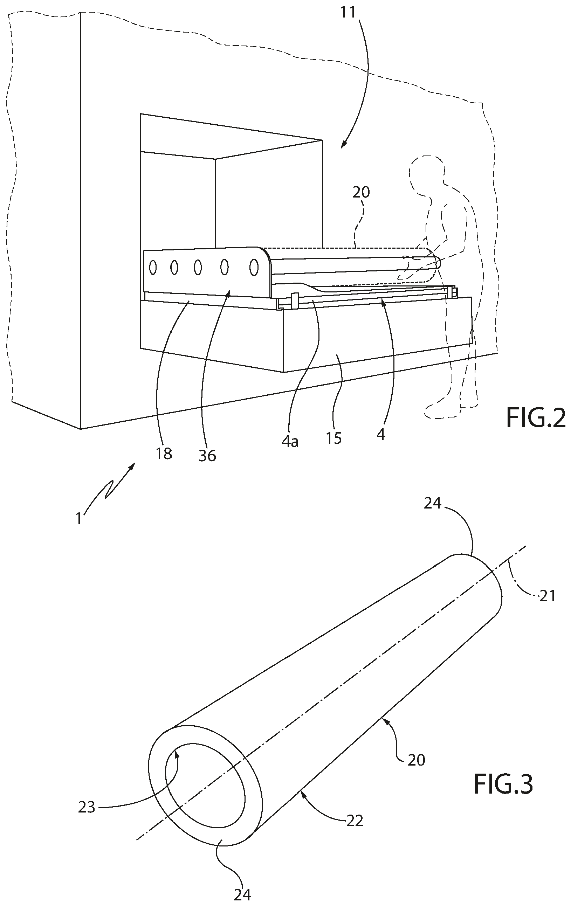

The station 11 defines an access point to the warehouse 1, as it allows one or more users to pick items from the loading units 4, and/or to deposit items on such loading units 4. According to the present description, at least several of the items stored in the warehouse 1 have a tubular shape and, for example, are defined by printing sleeves 20 (Figures 2 and 3). In particular, the present description applies to any item of tubular shape that needs to be treated with particular care to avoid damage to the outer surface thereof.

Once again with reference to Figure 1, the warehouse 1 comprises:
- a motorised transferring device, for example a stacker crane 12 (partially illustrated), configured so as to transfer the loading units 4 between the storage positions 3 thereof and the station 11; and
- a processing and control unit 13 configured with appropriate software relating to the management and to the storage of the tubular items, for example configured so as to:
   ▪ control the stacker crane 12 and therefore the transfer of the loading units 4 based on the commands and/or settings of the users;
   ▪ choose the loading unit 4 that must be sent to the station 11 based on the optimisation strategies and/or based on a pre-selected order;
   ▪ provide instructions or other information to the users at the station 11; so as to monitor the status of stocks.

In the illustrated preferred embodiment, the station 11 comprises a support table 15, which is sliding, i.e. it is normally recessed inside the structure 2 of the warehouse 1, but is extractable horizontally under the action of a corresponding actuator device (not shown) of the warehouse 1, in order to assume an operating position in which it projects horizontally relative to the perimeter of the structure 2 (Figure 2), in order to facilitate the item loading and unloading operations. In particular, the support table 15 is coupled slidably to a fixed frame 16, which can form part of the structure 2 or be independent.

According to an alternative, not illustrated, the support table 15 supporting the station 11 defines a peninsula that is fixed and projects horizontally and permanently relative to the structure 2.

Independently of the presence and the position of the support table 15, that station 11 has at least one position 17 configured so as to house a respective loading unit 4. In the specific case, the position 17 is above the support table 15. In particular, with reference to Figure 2, the support table 15 comprises a support device to support the loading unit 4 in the position 17. For example, the support device is defined by two horizontal guides 18, which are arranged in fixed positions on the upper face of the support table 15 and are configured so as to receive and support opposite sides of the tray 4a (in particular, the short edges 8). At the same time, the motorised transferring device (mentioned above with reference to Figure 1) is configured so as to cause the tray 4a to slide along the guides 18 during transfer of the loading unit 4 away from and towards the position 17.

Insofar as concerns the sleeves 20, one of them is shown in a simplified manner in Figure 3: it extends along an axis 21, has an outer surface 22 and an inner surface 23, cylindrical and coaxial to one another along the axis 21, and terminates axially with two end faces 24, opposite to one another. As shown in Figure 2, the loading unit 4 comprises a rack 36, which is arranged on the upper face of the plate 5, in a fixed position, and is configured so as to support the sleeves 20 with the axes 21 arranged in substantially horizontal positions and parallel to one another.

In particular, the rack 36 is a separate component from the tray 4a. The rack 36 can be arranged simply resting on the plate 5 (and remain still as a result of the sides 9 of the tray 4a and/or as a result of the weight thereof), or can be constrained in a releasable manner by means of a retention device (not shown), or can be fixed stably (by means of mechanical connection devices, by means of welding, or by means of bonding).

As an alternative, the rack 36 and the tray 4a can be portions of the same piece (and therefore not defined by separate pieces, which need to be coupled to each other).

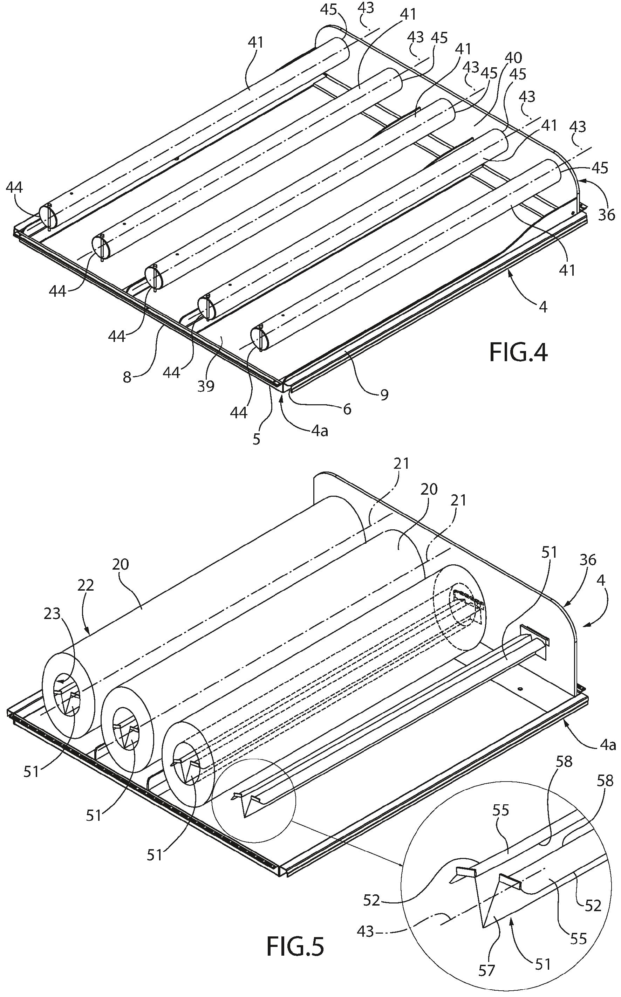

With reference to Figure 4, the rack 36 comprises:
- a base 39, which extends horizontally and is arranged on the upper face of the plate 5; for example, the base 39 is defined by a wall parallel to the plate 5;
- a shoulder 40 that projects upwardly from the base 39, preferably starting from an edge of the perimeter of the base 39 itself; and
- a plurality of arms 41, which project cantilevered from the shoulder 40 along respective axes 43, parallel to one another, in positions such as to be vertically facing the base 39 (and/or the plate 5) and thus to define a comb-like arrangement.

The arms 41 define respective shelves for supporting the sleeves 20. In fact, with this arrangement, it is possible to fit the sleeves 20, respectively, onto the arms 41, in horizontal positions. In particular, in order to be deposited onto the loading unit 4, the sleeve 20 is fitted around the arms 41, with an axial movement starting from a free end 44 of the arms 41, opposite to an end 45 that is fixed to the shoulder 40. The term "free" is intended to mean that the end 44 is spaced apart from the other parts of the loading unit 4 and therefore is devoid of supports, in any operating condition.

The arms 41 must have a cross-section with overall dimensions that are lower than the axial passage defined by the inner surface 23, in order to allow sliding of the sleeve 20 around the arm 41 without interference. After this insertion, the sleeves 20 are left to move as a result of their own weight, so as to bring the inner surfaces 23 vertically into contact on the arms 41, so that the sleeves 20 remain hanging, in practice, on the rack 36.

Considering two arms 41 that are arranged in positions adjacent to one another on the shoulder 40, preferably the distance thereof is greater than the diameter of the outer surface 22 of the sleeves 20, so as to avoid contact between said sleeves 20 when they are fitted onto the arms 41.

Preferably, the shoulder 40 extends parallel to the short edges 8 of the plate 5, whereas the axes 43 of the arms 41 are parallel to the long edges 6.

It is, however, possible to have an arrangement of the rack 36 that is rotated by 90°, i.e. with the shoulder 40 that extends parallel to the long edges 6 of the plate 5, and with the axes 43 parallel to the short edges 8, compatibly with the length of the sleeves 20 which must be supported and stored. This positioning, rotated by 90°, allows the operators to access the arms 41 when they are positioned in front of the station 11, and not alongside as shown in the example of Figure 2. This front access, in turn, allows a warehouse 1 with the station 11 arranged in a recessed position in the structure 2 to be obtained, without any horizontal extraction of the support table 15 and without any peninsula external to the structure 2.

Preferably, the shoulder 40 has a length that corresponds with the one of the short edges 8, i.e. it occupies the entire width of the plate 5 of the tray 4a. Therefore, during manufacture of the rack 36, the number of arms 41 which can be mounted on the same shoulder 40 depends essentially on the length of the short edges 8 of the tray 4a, as well as on the outer diameter of the sleeves 20. More preferably, the shoulder 40 is defined by a plate orthogonal to the base 39.

The arms 41 are spaced apart from the base 39 by a quantity sufficient to avoid contact between said base 39 and the lower area of the sleeves 20 when the latter, as a result of their own weight, are suspended and resting vertically on the arms 41.

The method of fixing the ends 45 of the arms 41 to the shoulder 40 can be of any type, in principle, provided that it guarantees sufficient rigidity and stability to support the bending stresses caused by the weight of the sleeves 20, without collapsing and therefore without leaving the sleeves 20 to rest on other parts of the loading unit 4.

Preferably, the axes 43 of the arms 41 are horizontal, i.e. they are parallel to the plate 5. As an alternative, they could have a slight slope upwards, going from the end 45 to the end 44, in order to facilitate axial sliding towards the shoulder 40 and to obtain a greater stability in axial positioning of the sleeves 20 on the arms 41.

In figure 4, the arms 41 are relatively simple from a structural and manufacturing viewpoint, as they have an outer surface that is circular and cylindrical. In particular, tubular elements are defined, hollow inside, so they are relatively lightweight.

However, this solution could have a drawback: the inner surface 23 of the sleeve 20 rests on the arm 41 along a single generatrix, at the upper end of such arm 41, so, during storage of the rack 36, the shape of the sleeve 20 could change from circular to oval, as a result of its own weight, particularly in the case in which the outer diameter and/or the weight are high.

The embodiment of Figure 5 according to the invention is aimed at resolving this potential drawback: the arms 41 are replaced by arms 51 having a cross-section with different shape to the circular one. Such shape is configured to provide a support with the inner surface 23 of the sleeve 20 along at least two separate generatrices, which are angularly spaced apart from each other about the axis 21. In reference to the two support generatrices, mentioned above, the terms "separate" and "spaced apart" are intended to mean that, during use, an upper zone of the inner surface 23, in intermediate position between the two support generatrices, is not coupled to, and is therefore vertically distanced from, the upper end of the arm 51.

In this manner, the weight of the sleeve 20 is shifted onto at least two support areas 52 of the arm 51, which are arranged on opposite sides relative to a vertical centreline plane, i.e. an ideal plane that is orthogonal to the plate 5, and on which the axis 43 lies. Obviously, the support areas 52 are separate and angularly spaced apart from each other, similarly to what is described above for the two corresponding generatrices supporting the inner surface 23, described above.

Furthermore, thanks to this configuration of the cross-section of the arms 51, the sleeves 20 are in a position of greater equilibrium, compared to the condition they are in, when resting on the arm 41 at a single central generatrix.

In particular, in cross-section, the arm 51 comprises two wings 55 which project cantilevered in opposite directions, relative to such centreline plane. The edges at the opposite ends of the wings 55 define the support areas 52 for supporting the inner surface 23 of the sleeve 20. In greater detail, the arm 51 comprises an intermediate portion 57 having a V-shaped cross-section, which is symmetrical relative to the aforesaid centreline plane: the wings 55 project, respectively, from upper side ends 58 of the intermediate portion 57. This configuration guarantees that the arm 51 is relatively lightweight, but nonetheless resistant to the bending stresses caused by the weight of the sleeve 20 that is fitted onto and supported above it. It is nonetheless possible to design other configurations of the cross-section that allow two support areas 52 to be obtained, which are spaced apart from one another, during use, by an empty space that vertically separates the upper end of the arm 51 from the upper area of the inner surface 23: by way of non-limiting example, an arm could be adopted that has a V-shaped cross-section (without the wings 55, shown in the embodiment of Figure 5), or a cross-section with a triangular shape having a vertex turned downwards and the base upwards, or a square or rectangular cross-section (with vertical and horizontal sides).

Preferably, the shoulder 40 is arranged at one end of the tray 4a, and the arms 51 extend for the entire length of the plate 5. In particular, the arms 51 have a length that is substantially equal to the one of the long edges 6 of the plate 5. The rack 36 therefore occupies the upper space of the tray 4a entirely. According to variants not shown, the rack 36 could occupy only a part of the tray 4a.

It is appropriate for the arms 51 to have a length greater than or equal to the axial length of the sleeves 20, in order to facilitate the loading operations and division of the stresses along the entire length of the arms 51. However, it is also possible to reduce the length of the arms 51 relative to the sleeves 20, without compromising operation of the rack 36.

Preferably, the rack 36 comprises reinforcement elements, for example defined by transverse ribbing or tabs 59, coupled to the upper face of the base 39 and/or to the shoulder 40, in order to guarantee a greater rigidity.

Preferably, the method of coupling the ends 45 of the arms 51 to the shoulder 40 is such as to guarantee a rapid attachment and interchangeability of said arms 51 (for example, in order to adapt the rack 36 to different diameters of the inner surfaces 23 of the sleeves 20).

It is clear from what is stated above that the operations for depositing and picking the sleeves 20 are relatively simple for the operators to be performed. For example, during depositing onto the loading unit 4, the sleeves 20 are removed, one after the other, from a trolley (not illustrated), where they are arranged in vertical positions spaced apart from each other, and are fitted onto the arms 51 in a relatively easy manner, since they must be raised by a relatively limited amount, only in order to reach the end 44 of the arm 51 in the axial passage defined by the inner surface 23 of the sleeve 20. Obviously, the fact of making the loading and unloading operations easier considerably reduces the risks of damaging the outer surfaces 22 of the sleeves 20 during such operations.

These risks are practically absent once the sleeves 20 have been arranged on the loading unit 4, since the outer surfaces 22 of the sleeves 20 remain spaced apart from each other, and spaced apart from the rack 36 that supports them.

Lastly, the rack 36 is sufficiently rigid and stable to be able to support the sleeves 20 securely, both in static conditions during storage in the positions 3, and in dynamic conditions during transfers between the positions 3 and the position 17 of the station 11.

In conclusion, it is clear from the above that changes and variants may be made to the loading unit 4 and to the warehouse 1 described above with reference to the appended figures, without thus deviating from the scope of protection of the present invention, as defined in the appended claims.

In particular, the shoulder 40 and/or the base 39 could have different shapes from what is illustrated, for example to guarantee a greater rigidity.

Furthermore, as mentioned above:
- the rack 36 could engage only a part of the upper face of the plate 5; and/or
- the length of the arms 51 could be lower than what is shown by way of example; and/or
- the base 39 and the plate 5 could be integrated to form a single piece (in this case, the shoulder 40 would project directly from the plate 5); and/or
- the rack 36 could be rotated by 90° relative to what is illustrated, to be able to access the ends 44 and the sleeves 20 remaining in a frontal, and not side, position, relative to the station 11.

Furthermore, the ends 44 of the arms 51, rather than being free, could be supported by a further shoulder, which is arranged in an opposite position relative to the shoulder 40 and can be temporarily decoupled and/or removed, in order to perform loading and unloading operations.

## Claims

1. A loading unit (4) for supporting and storing tubular items in an automated warehouse (1), in particular for supporting and storing printing sleeves (20), the loading unit (4) comprising:
- a tray (4a) having an upper face and
- a rack (36), which is arranged in a fixed position on said upper face and comprises a plurality of arms (51) arranged in such a way as to support respective tubular items and in such a way that the supported tubular items extend along axes (21) that are substantially horizontal and parallel to each other; **characterised in that** at least one of the arms (51) has a transverse section configured so as to define at least two support areas (52) which are arranged at opposite sides of a centreline plane orthogonal to said upper face and are distinct and spaced apart from each other to vertically support, in use, a cylindrical inner surface (23) of said tubular items at respective generatrices of said cylindrical inner surface (23).

2. The loading unit according to claim 1, wherein said rack (36) comprises a shoulder (40) projecting upwardly with respect to said upper face; and wherein said arms (51) project cantilevered from said shoulder (40).

3. The loading unit according to claim 2, wherein said arms (51) comprise respective first ends (45) fixed to said shoulder (40) and respective second ends (44), which are opposite said first ends (45) and are free.

4. The loading unit according to claim 2 or 3, wherein said tray (4a) comprises a plate (5), defining said upper face, with a rectangular or square shape, and having two first edges (6), parallel to each other, and two second edges (8), parallel to each other; and wherein said shoulder (40) extends parallel to said second edges (8), and said arms (51) extend parallel to said first edges (6).

5. The loading unit according to claim 4, wherein said shoulder (40) is arranged at an end of said plate (5).

6. The loading unit according to claim 5, wherein said arms (51) have substantially the same length as said first edges (6).

7. The loading unit according to any one of claims 4 to 6, wherein said shoulder (40) has substantially the same length as said second edges (8).

8. The loading unit according to any one of the preceding claims, wherein said at least one of the arms (51) comprises, in cross-section, two wings (55), which project cantilevered in opposite directions with respect to said centreline plane, and end with respective edges defining said support areas (52).

9. The loading unit according to claim 8, wherein said at least one of the arms (51) comprises, in cross-section, an intermediate V-shaped portion (57), symmetrical with respect to said centreline plane; and wherein said wings (55) project cantilevered from upper side ends (58) of said intermediate portion (57), respectively.

10. Automated warehouse (1) comprising:
- a fixed structure (2) defining a plurality of storage positions (3) having dimensions such as to support and store, each, a respective loading unit (4);
- at least one picking/depositing station (11) to pick tubular items from at least one of the loading units (4) and/or to deposit tubular items on at least one of the loading units (4);
- a motorised transferring device (12) configured so as to transfer said loading units (4) between the storage positions (3) thereof and the picking/depositing station (11); and
- a processing and control unit (13) configured with appropriate software relating to the management and to the storage of said tubular items;
**characterised in that** said at least one loading unit (4) is provided according to any one of the preceding claims.
